# EUROPEAN PATENT APPLICATION

(11) **EP 1 471 130 A1**
(43) Date of publication of application: **27.10.2004**
(21) Application number: 03252539.6
(22) Date of filing: 23.04.2003
(51) Int. Cl.: C10L 1/14, C10L 10/02, C10L 10/06

(54) **Fuel composition containing molybdenum source and metal-containing detergent, and its use in two-stroke engines**

(71) Applicant: Ethyl Petroleum Additives Ltd, Bracknell, Berkshire RG12 2UW (GB)
(72) Inventor: Clague, Nicholas P., Bracknell Berkshire, RG12 2UW (GB); Haynes, Michael A., Bracknell Berkshire, RG12 2UW (GB); Growcott, Peter, Bracknell Berkshire, RG12 2UW (GB)
(74) Representative: Cresswell, Thomas Anthony

(57) **Abstract**

A fuel composition, and a method and an apparatus for combusting it in a two-stroke engine, in which molybdenum introduced from the fuel will interact with alkaline earth metal originating from a detergent or other co-ingredient of the fuel in the combustion products to increase detergency without increasing the level of alkaline earth metal or compounds present in the fuel or combustion products thereof. In this manner, the engine operates more cleanly and efficiently without increasing the risk of harmful alkaline earth materials and compounds thereof blocking and poisoning catalysts, sensors and/or automotive on-board diagnostic devices, and it can lead to improved durability of exhaust after treatment systems.

## Description

### FIELD OF THE INVENTION

The present invention relates to a fuel composition for two-stroke engines containing a molybdenum source and an alkaline earth metal-containing detergent compound, and a method of its use for delivering molybdenum and the alkaline earth metal-containing detergent into a fuel combustion system and to the exhaust therefrom of a two-stroke engine. By the present invention, the molybdenum increases the detergent action of an alkaline earth metal detergent compound included in the fuel composition. This enhancement permits use of lower yet still effective levels of metal-based detergent in the fuel composition, and thus lower levels of alkaline earth metals are present in the fuel composition and resulting fuel combustion products. The decreased introduction level of alkaline earth metal as detergent, in turn, directly results in reduced levels of deposition of alkaline earth metal compounds upon engine monitoring components such as sensors and automotive on-board diagnostic devices and blocking of catalysts in the exhaust system. The invention thus provides an improved combustion fuel composition for two-stroke engines containing an alkaline earth metal-containing detergent and a molybdenum source, and a method and apparatus for its use in improving combustion efficiency in a combustion unit and durability of associated exhaust after-treatment systems.

### BACKGROUND OF THE INVENTION

Two-stroke combustion engines are widely used in transportation and recreational vehicles such as motorcycles, mopeds, snow mobiles and marine outboard motors, and also in landscaping equipment such as lawn mowers and chain saws. Two-stroke engines operate by combusting a mixture of fuel and a lubricant in prescribed proportions. The lubricant side of the two-stroke engine fuel composition typically includes mineral oil or a synthetic base fluid of lubricating viscosity, and performance-enhancing lubricant additives such as a detergent and/or dispersant. The detergent has been used to help provide cleaner combustion, reduce carbon deposits, and reduce smoke in the exhaust from the combustion system.

Two-stroke combustion engines generally operate in a facile, reliable, and power-efficient manner. However, the fuel-lubricant mixtures used as the combustion fuel in these two-stroke combustion engines also tend to form combustion products with relatively higher amounts of unburned fuel components, particulate matter, or other pollutants than when combusted in four-cycle engines of comparable power. Consequently, two-stroke engines have come under greater scrutiny and regulation from an emission control standpoint. To meet emission standards already applicable to or planned for vehicles or devices operating on two-stroke engines, the exhaust systems are being developed or retrofitted to incorporate catalytic units such as diesel oxidation catalysts, catalyzed particulate matter filters, continuous regenerating filter systems, and the like. The development and refinement of practical and economical versions of these emission control devices is still ongoing, especially with respect to meeting stricter emission standards under consideration or adopted for implementation in the near future in important markets including the EU.

A number of patent references describe various chemistries of two-stroke engine fuels.

For instance, U.S. Patent No. 5,498,353 describes a semi-synthetic two-stroke engine oil formulation with high lubricity and high detergency meeting low smoke and low exhaust system blocking requirements, comprising a base oil consisting of a high-viscosity mineral oil, medium-viscosity mineral oil, a solvent and a mixture of three polyisobutylenes with different molecular weights, and appropriate detergents, such as phenates and sulfonates of calcium, and dispersants.

U.S. Patent No. 6,528,459 B1 describes a marine lubricant for a two-stroke engine powered with a fuel having a sulfur content less than 1%, in which the lubricant consists of a mixture of distillates used as lubricating bases containing amounts of dispersing additive of succinimide type, an overbased detergent additive of sulfonate type, an overbased detergent additive of the phenate type, in respective amounts satisfying certain stated proportional relationships. Alkaline earth sulfonates and phenates are described relative to the last two mentioned components.

The addition of molybdenum compounds to liquid fuels containing lubricating oils has been described in the patent literature. For instance, U.S. Patent Nos. 5,445,749 describes a method for lubricating metal-ceramic interfaces in hybrid engines by supplying a composition to the interface comprising a carrier fluid and a thiocarbamate, such as molybdenum dithiocarbamates. The carrier fluid is described as being a lubricating oil supplied from a sump, or alternatively a liquid fuel. U.S. Patent Nos. 5,445,749 includes examples of compositions prepared of molybdenum dithiocarbamates in liquid fuel as the carrier fluid, and base oil and diluent oil are the only other indicated ingredients of those lubricated fuel compositions.

The addition of molybdenum compounds together with or without a metal-containing detergent to crankcase lubrication oils has been described in the patent literature. U.S. Patent No. 6,300,291 describes a lubricating oil composition for use in an engine crankcase to improve low temperature anti-wear performance and fuel economy containing an oil of lubricating viscosity, at least one calcium detergent providing calcium in an amount of 0.058 to 0.58 wt.%, at least one soluble molybdenum compound providing Mo in amount of up to 350 ppm Mo, at least one nitrogen containing friction modifier, and at least one zinc dihydrocarbyldithiophosphate compound providing phosphorous in amount of about 0.1 wt.%, where the composition has a NOACK volatility of about 15.5 wt% or less.

U.S. Patent No. 6,074,993 also describes a lubricating composition for use in an engine crankcase to improve fuel economy and wet clutch friction properties containing an oil of lubricating viscosity, at least one overbased calcium or magnesium detergent, and oil soluble dimeric molybdenum compound providing Mo in an amount of up to 2000 ppm Mo, an oil soluble trinuclear molybdenum compound providing Mo in an amount of up to 350 ppm Mo, at least one organic friction modifier, and at least one zinc dihydrocarbyldithiophosphate compound, where the composition has a TBN of at least 3.6 from the overbased detergent and a NOACK volatility of about 0.15 wt% or less.

European Patent EP 0 874 040 B1 describes synergistic organomolybdenum antiwear compositions consisting of (a) an organomolybdenum complex prepared by reacting about 1 mole fatty oil, 1.0 to 2.5 moles diethanolamine and a molybdenum source sufficient to yield 0.1 to 12.0 percent of molybdenum based on the weight of the complex, and (b) an organic sulfur compound selected from the group consisting of 1,3,4-thiadiazole compounds of a specified formula. EP 0 874 040 B1 also describes lubricating compositions containing 0.1 to 10.0 percent by weight of the antiwear composition in combination with a major portion of oil of lubricating viscosity.

U.S. Patent Nos. 6,509,303; 6,528,461; and 6,528,463 describe organic soluble molybdenum complex additives and lubricating motor oils containing them.

However, among other things, the above-mentioned patent references fail to describe any recognition that certain metal-based detergents, if used as described therein, can be a source of contaminants having a detrimental effect on the combustion system's catalysts, after treatment system, and/or other emission control systems. It is desirable to increase the performance of a fuel composition for two-stroke engines by use of performance-enhancing additives yet without causing undesirable increases in contaminants emanating from additives that may result in catalyst build up and poisoning, after treatment system malfunction, and/or increased emissions of pollutants.

### SUMMARY OF THE INVENTION

The present invention relates to an improved fuel composition for two-stroke engines containing a hydrocarbonaceous fuel, a lubricant of lubricating viscosity, an alkaline earth metal-containing detergent compound, and a molybdenum source. The invention also relates to method of using, and apparatus for use of, the fuel composition to improve combustion efficiency in a combustion unit, and which additionally or alternatively improves durability of an associated exhaust after-treatment system.

By the present invention, a fuel composition comprises a fuel-lubricant admixture including an alkaline earth metal-containing detergent compound and a source of molybdenum that interact to yield increased detergency when the fuel composition is combusted in two-stroke engine. This synergism permits use of lower levels of alkaline earth metal-containing detergent in the fuel composition to meet a desired minimal level of detergency. The lower alkaline earth metal content made possible by the addition of the molybdenum source in turn serves to reduce the amount of alkaline earth metal available for deposition as alkaline earth metal compounds upon catalysts deployed in the exhaust and combustion after-treatment systems, or engine monitoring components such as sensors and automotive on-board diagnostic devices. This reduces blocking or glazing of the catalysts, and thereby increases the durability and effective lifespan of the catalysts used in the exhaust treatment system(s). The reduction in the detergent treat rate required for detergent action can also permit cost reductions in the overall fuel additive package, depending on the comparative cost of the small addition rate of molybdenum source needed to induce the boost in detergency.

In another embodiment of this invention, the fuel composition is formulated by the addition of the molybdenum source without any concomitant reduction in the level of detergent. In this approach, the level of detergency achieved is significantly increased beyond that obtained without inclusion of the molybdenum source in the fuel composition without incurring any drawbacks such as increased deposition of alkaline earth metal compounds on catalysts in the exhaust or after-treatment system.

In one embodiment of this invention, the fuel composition having these advantages and capabilities comprises about 95 to about 99.5 wt.% combustible hydrocarbonaceous liquid fuel, about 1 to about 5 wt.% lubricant comprising an oil of lubricating viscosity, about 0.001 to about 0.05 wt.% detergent comprising an alkaline earth metal-containing compound, and about 1 ppm to about 10 ppm Mo from a molybdenum source. An amount of the molybdenum source is provided adequate for the purpose of increasing detergency upon interaction with the detergent in the fuel composition before, during and/or after combustion. That amount of Mo needed for that purpose can vary, but generally will be in an amount effective to deliver Mo in amount of about 1 ppm to about 10 ppm. Other performance enhancing additives optionally can be included as well in the fuel composition to the extent they do not interfere with the interaction of the molybdenum and detergent as described herein.

In one embodiment, the combustion apparatus including the two-stroke engine combusting the fuel composition described herein has an after-treatment system selected from the group consisting of a diesel oxidation catalyst, a catalyzed diesel particulate matter filter, and a continuously regenerating technology diesel particulate filter. The two-stroke engine may be a gasoline combustion engine or a diesel combustion engine. The apparatus having the two-stroke engine operable using the fuel composition described herein may be, for example, a motorcycle, a moped, a snow mobile, an all terrain vehicle, tractor, mining equipment, construction equipment, a marine outboard motor, a lawn mower, a chain saw, a pump, an electrical generator, a garden tiller, a landscaping hedge trimmer, back pack blower, and so forth.

It is to be understood that both the foregoing general description and the following detailed description are exemplary and explanatory only and are intended to provide further explanation of the present invention, as claimed.

### DETAILED DESCRIPTION OF THE INVENTION

The present invention relates to a fuel composition, and a method and an apparatus for combusting it in a two-stroke engine, and in which molybdenum delivered from the fuel will interact with alkaline earth metal originating from a detergent or other co-ingredient of the fuel effective to increase detergency without increasing the level of alkaline earth metal or compounds present in the fuel or combustion products thereof. In this manner, the engine operates more cleanly and efficiently without increasing the risk of harmful alkaline earth materials and compounds thereof blocking and poisoning catalysts, sensors and/or automotive on-board diagnostic devices. That is, the molybdenum acts as a significant detergency booster without causing an adverse effect upon emission control systems.

In another embodiment, the present invention makes it possible to maintain adequate detergency while decreasing the level of alkaline earth metal-based detergents needed in a two-stroke fuel composition. That is, since the molybdenum added will boost the detergent effect of the alkaline earth metal-containing detergent, the amount of alkaline earth metal-containing detergent needed is reduced for a given minimal desired level of detergency. The resulting reduced level of alkaline earth metal translates into the reduced presence of alkaline earth metal by-product compounds, such as sulphates thereof, in the exhaust stream such that less blocking and other contaminant-related problems occur on exhaust emissions after-treatment devices and/or control devices. These beneficial results include maintaining catalyst performance, maintaining sensor performance, maintaining LNT performance, and maintaining diesel particulate filter (DPF) performance for longer periods of time. The present invention therefore also can be used to improve durability of exhaust after-treatment systems.

In one embodiment of this invention, a fuel-oil mixture is introduced into the combustion chamber and burned in a two-stroke engine, and the combustion products thereof pass over a catalyst of an oxidation catalyst or catalyzed particulate matter filter where alkaline earth metal can deposit onto the catalyst surface, such as in the form of an alkaline earth metal sulphate. The formation of this alkaline earth sulfate and the like, if not inhibited or not controlled while other enhancements are made in the fuel performance, then mechanically blocks the catalyst, preventing it from functioning properly. The inclusion of a small amount of molybdenum has been discovered to increase the detergency of the fuel composition containing an alkaline earth metal-containing compound without causing an increase in the amount of alkaline earth metal in the formulation and formation and build up of alkaline earth sulphate on the catalyst. By impeding the formation of impermeable or permeability-reducing glazes on the catalyst, the catalyst life can be extended by the present invention.

Molybdenum is present in the fuel composition as an oil-soluble and fuel-soluble additive that can volatilise and thereby be present in the combustion chamber and exhaust stream. By "molybdenum" herein is meant any molybdenum compound, source or material, including but not limited to molybdenum trioxide, mono-nuclear and di-nuclear and tri-nuclear molybdenum sulfonate, molybdenum phenate, molybdenum salicylate, molybdenum carboxylates, molybdenum dithiocarbamates, neutral and overbased molybdenum salicylates, neutral and overbased molybdenum phenates, neutral and overbased molybdenum sulfonates, ammonium molybdate, sodium molybdate, potassium molybdate, and molybdenum halides, compounds derived from molybdenum reacted with amines and alcohols, and combinations and mixtures thereof. In one particular embodiment, the molybdenum source comprises an organomolybdenum complex prepared by reacting fatty oil, diethanolamine, and a molybdenum source. Other suitable molybdenum sources includes molybdenum complexes described in U.S. Patent Nos. 6,509,303, 6,528,461, and 6,528,463, which teachings are incorporated herein by reference.

Examples of useful commercial oil soluble molybdenum compounds are Sakura-Lube 100, Sakura-Lube 155, Sakura-Lube 165, and Sakura-Lube 180 from Asahi Denka Kogyo K.K., Molyvan® A, Molyvan® 807 and Molyvan® 822 from R. T. Vanderbilt Company, and Naugalube MolyFM from Crompton Corporation. Examples of commercial sulfur- and phosphorus-free oil soluble molybdenum compounds or complexes are Sakura-Lube 700 from Asahi Denka Kogyo K.K., and Molyvan® 856B and Molyvan® 855 from R. T. Vanderbilt Company, Inc.

The fuel composition also includes a detergent compound that is an alkaline earth metal-containing compound. These detergents are metallic additives containing charged polar groups, such as sulfonates, phenates, carboxylates, or phosphonates, with aliphatic, cycloaliphatic, or alkylaromatic chains, and several metal ions that will include at least one alkaline earth metal ion. These detergents function by lifting deposits in the combustion chamber, which can include related injection valves, injection ports, and so forth. The alkaline earth metal-containing detergent compound includes calcium, magnesium, barium and strontium salts imparting detergent action in a fuel-oil composition. Examples include neutral and overbased alkaline earth metal sulphonates, and neutral and overbased alkaline earth metal phenates. These detergents may include alkaline earth metal salts of petroleum sulphonic acids and long chain mono- or di-alkylarylsulphonic acids with each alkyl group comprising 12-18 carbon atoms and the aryl group being benzyl, tolyl, and xylyl. These detergents also may include alkaline earth metal phenates of alkylphenols and alkylmercaptophenols in which the linear or branched alkyl groups comprising from 4-50 carbon atoms and more particularly from 8-20 carbon atoms.

Particular examples of the detergent include salts such as selected from the group consisting of neutral calcium sulphonate, overbased calcium sulphonate, neutral calcium phenate, overbased calcium phenate, neutral magnesium sulphonate, neutral magnesium sulphonate, overbased magnesium phenate, overbased magnesium phenate, or combinations and mixtures thereof. In one preferred embodiment, the detergent comprises a neutral calcium salt.

The combustible hydrocarbonaceous fuel and lubricant of lubricating viscosity are not particularly limited to the extent they can be proportioned with the alkaline earth metal-containing detergent compound and the molybdenum source to function as necessary in a two-stroke engine.

By "hydrocarbonaceous fuel" herein means a liquid fuel that can introduced into a combustion chamber and combusted in a two-stroke engine. Examples include, but are not limited to, diesel fuels, biodiesel fuels, biodiesel-derived fuels, alcohols, ethers, kerosene, jet fuels, low sulfur fuels, synthetic fuels, such as Fischer-Tropsch fuels, liquid petroleum gas, fuels derived from coal, genetically engineered biofuels and crops and extracts therefrom, natural gas, propane, butane, unleaded motor gasolines, aviation gasolines, and so-called reformulated gasolines which typically contain both hydrocarbons of the gasoline boiling range and fuel-soluble oxygenated blending agents, such as alcohols, ethers and other suitable oxygen-containing organic compounds. In one embodiment, it is preferred that the hydrocarbonaceous fuel is substantially sulfur-free, by which is meant a sulfur content not to exceed on average about 30 ppm of the fuel.

The oil of lubricating viscosity generally is a base oil. It can be a mineral base oil or synthetic base oil, or a combination thereof, supplied in fluid form. The mineral base oil can be a high-viscosity mineral oil, medium mineral oil, or combination thereof. A suitable high viscosity mineral oil includes paraffinic-based oil comprising naphthenic and aromatic groups. Heavy neutral base oils can be used. This heavy mineral oil may have a viscosity of about 75-150 cSt at 40°C and about 8-16 cSt at 100° cSt (D445). It generally also will have a flash point about 250°C, a pour point of less than about 12°C, and a specific gravity of about 0.9 at 16°C (D1298). Medium neutral base oils can be used. This medium mineral oil may have a viscosity of about 20-60 cSt at 40°C and about 4-8 cSt at 100° cSt (D445). It generally also will have a flash point about 220°C, a pour point of less than about 12°C, and a specific gravity of about 0.9 at 16°C (D1298).

Synthetic base fluid oils can be selected, for example, from the group consisting of paraffinic, naphthenic, aromatic, poly-alpha-olefins, synthetic esters, and polyol esters, and mixtures thereof. In a preferred embodiment, the base oil contains less than or equal to 0.03 wt. % sulfur, and greater than or equal to 90 wt. % saturates, and has a viscosity index greater than or equal to 80 and less than or equal to 120. In another embodiment, the oil contains less than or equal to 0.03 wt. % sulfur, and greater than or equal to 90 wt. % saturates, and has a viscosity index greater than or equal to 120. In a more preferred embodiment, the base oil is substantially sulfur-free.

In one embodiment of this invention, the fuel composition having these advantages and capabilities comprises about 95 to about 99 wt.% combustible hydrocarbonaceous liquid fuel, about 1 to about 5 wt.% lubricant comprising an oil of lubricating viscosity, about 0.001 to about 0.05 wt.% detergent comprising an alkaline earth metal compound, and about 1 ppm to about 10 ppm Mo from a molybdenum source. An amount of the molybdenum source is provided adequate for the purpose of increasing detergency upon interaction with the detergent in the fuel composition before, during and/or after combustion. That amount of Mo can vary but generally will be in an amount effective to deliver Mo in amount of about 1 ppm to about 10 ppm.

These four important fuel-oil mixture ingredients, i.e., fuel, oil, detergent comprising alkaline earth metal-containing compound, and molybdenum source, can be combined in any convenient order or manner. For example, the oil, detergent comprising alkaline earth metal-containing compound, and molybdenum source can be combined as an oil concentrate or package, which in turn is combined with the fuel package in a prescribed ratio to provide the fuel composition (i.e., the fuel-oil mixture).

In addition to the fuel composition ingredients and additives mentioned thus far, there may be a need or advantage for other supplemental additives that perform other specific functions not provided at all or sufficiently by the main components. These supplemental additives include, for example, ashless or polymeric dispersants, co-dispersants, antioxidants, lubricity solvents, viscosity index improvers, pour point depressants, corrosion inhibitors, rust inhibitors, foam inhibitors, frictional modifiers, and other additives including those commonly used in the fuel package, oil package, or both parts of fuel-oil compositions for two-stroke engines. These various additives can be added into the respective oil or fuel packages before their admixture, or added after admixture of fuel and oil package components has been commenced. The additives must be dissolvable or dispersible the fuel package or oil package, or the fuel composition, and it must be stable in the fuel composition.

For example, dispersants can be introduced, for example, in the oil package of the fuel composition. Ashless dispersants include N-substituted long chain alkenyl succinimides, Mannich bases, and so forth, including those known and used generally in combustible fuel-oil compositions. Polymeric dispersants generally are hydrocarbon-based polymers, which contain polar functionality. Examples include, for example, materials that include, as their main component, one or more of mono-, bi- or boronated polybutene succinimides, borated or non-borated polybutene amines and polybutene succinimides. If used, the total amount of dispersant in the fuel composition can be in the range of about 2-15 wt.%.

Lubricity solvents can be used including a suitable solvent having a flash point of higher than 100°F, a boiling point of lower than 570°F, and a distillation range of from about 360-572°F. The solvent can be introduced, for example, in the oil package. If used, the amount of solvent may range from about 5-30 wt.% of the total fuel composition.

An antifoaming agent can be included. The antifoaming agent generally will be used in an amount of less than 1 wt.%. The antifoaming agent can be introduced, for example, in the oil package.

Oxygenates used in the oil package can comprise phenolic antioxidants such as hindered phenols, or an aminic antioxidant such as alkyl diphenylamine.

Oxygenates suitable for use in the fuels contained in the fuel compositions of the present invention include methanol, ethanol, isopropanol, t-butanol, mixed alcohols, methyl tertiary butyl ether, tertiary amyl methyl ether, ethyl tertiary butyl ether and mixed ethers. Oxygenates, when used, will normally be present in the reformulated gasoline fuel in an amount below about 25% by volume, and preferably in an amount that provides an oxygen content in the overall fuel in the range of about 0.5 to about 5 percent by volume.

The preparation method of the two-stroke fuel composition can be as follows. In preparing the oil package, the base oil and any solvent are mixed at room temperature. The detergent, molybdenum source, and any other oil additives (such as dispersants) are blended and preheated, such as to a temperature of about 50-70°C, and then mixed into the base oil with mixing. The resulting oil package can be combined with mixing with the fuel package, including any fuel additives previously added to it, in a prescribed ratio to obtain the compositions described herein. A substantially uniform resulting fuel-oil mixture is preferred. This fuel-oil mixture usually is prepared before introducing the fuel composition components into the two-stroke engine. For example, the admixture could be performed before it is supplied to the fuel tank or in the fuel tank itself.

For purposes herein, by "combustion system" and "apparatus" herein is meant, for example and not by limitation herein, any diesel-electric hybrid vehicle, a gasoline-electric hybrid vehicle, a two-stroke engine, any and all burners or combustion units, including for example and without limitation herein, stationary burners, waste incinerators, diesel fuel burners, diesel fuel engines, automotive diesel engines, gasoline fuel burners, gasoline fuel engines, power plant generators, and the like.

The hydrocarbonaceous fuel combustion systems that may benefit from the present invention include all combustion units, systems, devices, and/or engines that burn fuels. By "combustion system" herein is also meant any and all internal and external combustion devices, machines, engines, turbine engines, jet engines, boilers, incinerators, evaporative burners, plasma burner systems, plasma arc, stationary burners, and the like which can combust or in which can be combusted a hydrocarbonaceous fuel.

By "after treatment system" or "after treatment device" herein is meant any system or device which contacts the combustion product(s) from a combustion chamber in a manner designed to oxidize, reduce or otherwise treat the combustion product(s). Examples, but not by way of limitations herein, of such after treatment systems include a vehicular oxidation catalytic converter, lean NOₓ traps, catalyzed diesel particulate filter ("C-DPF") and a continuously regenerating technology diesel particulate filter. "After treatment system" also includes associated sensors like O₂ sensors and NOₓ sensors. Analogous gasoline combustion after treatment systems are known and are included herein as deriving benefit from the present invention.

The practice and advantages of this invention are demonstrated by the following examples, which are presented for purposes of illustration and not limitation. Unless indicated otherwise, all amounts, percentages, ratios, and the like, are by weight.

### Example

Detergency tests were carried out using a modified ISO EGD 3 hour detergency test procedure. A commercial oil from the market was first run against the standard JATRE 1 reference oil and then the commercial oil was used as the reference for which the candidates were compared. The testing evaluated the high temperature detergency of two-stroke spark ignition gasoline engine lubricants.

The test was carried out on a 50cc air cooled motor cycle engine for a specified period of time to evaluate ring sticking, piston deposits and cylinder head deposits. A reference was carried out at the start of each day and usually two candidates were evaluated each day.

For these experiments:
the detergent used was calcium sulphonate;
the dispersant was a succinimide dispersant;
the antifoaming additive was a silicon based antifoaming agent;
the Mo source was Molyvan® 855, R.T. Vanderbilt;
Antioxidant 1 (AO1) was a sulphur based antioxidant;
Antioxidant 2 (AO2) was an amine type antioxidant; and
Antioxidant 3 (AO3) was a phenolic antioxidant.

The detergency index and piston skirt index values reported in Table 1 were generated by comparisons against a commercial oil.

**Table 1**

| **Packages** | **Sample Run** | | | | | | | | |
|---|---|---|---|---|---|---|---|---|---|
| **Ingredient** | A1 | B1 | C1 | D1 | E1 | F1 | G1 | H1 | I1 |
| Detergent | 16.04 | 8.02 | - | 8.02 | - | - | 8.02 | - | 8.02 |
| AO1 | 2.33 | 2.33 | 2.33 | 2.33 | 2.33 | 2.33 | 2.33 | 2.33 | 2.33 |
| Dispersant | 70 | 70 | 70 | 70 | 70 | 70 | 70 | 70 | 70 |
| AO2 | 1.33 | 1.33 | 1.33 | 1.33 | 1.33 | 1.33 | 1.33 | 1.33 | 1.33 |
| Process Oil | 10.26 | 18.28 | 26.3 | 16.78 | 24.8 | 23.8 | 15.78 | 22.3 | 14.28 |
| Antifoam | 0.04 | 0.04 | 0.04 | 0.04 | 0.04 | 0.04 | 0.04 | 0.04 | 0.04 |
| Mo Source | 0 | 0 | 0 | 1.5 | 1.5 | 0 | 0 | 1.5 | 1.5 |
| AO3 | 0 | 0 | 0 | 0 | 0 | 2.5 | 2.5 | 2.5 | 2.5 |
| TOTAL | 100 | 100 | 100 | 100 | 100 | 100 | 100 | 100 | 100 |
| | | | | | | | | | |
| Package Description | Full Ca | Half Ca | No Ca | Half Ca + Mo | No Ca + Mo | No Ca + AO3 | Half Ca + AO3 | No Ca + Mo +A03 | Half Ca + Mo+ AO3 |
| Package | 8 | 8 | 8 | 8 | 8 | 8 | 8 | 8 | 8 |
| Priorlube 1929 | 5 | 5 | 5 | 5 | 5 | 5 | 5 | 5 | 5 |
| Exxsol D80 | 20 | 20 | 20 | 20 | 20 | 20 | 20 | 20 | 20 |
| Napvis D10 | 25 | 25 | 25 | 25 | 25 | 25 | 25 | 25 | 25 |
| Mobil Jurong 500SN | 19 | 19 | 19 | 19 | 19 | 19 | 19 | 19 | 19 |
| Mobil Jurong 150SN | 23 | 23 | 23 | 23 | 23 | 23 | 23 | 23 | 23 |
| | | | | | | | | | |
| Detergency Index | 117 | 113 | 94 | 136 | 135 | 121 | 100 | 122 | 149 |
| Piston Skirt Index | 101 | 97 | 91 | 103 | 86 | 86 | 97 | 93 | 100 |
| | | | | | | | | | |
| Catalyst Blocking | | | | | | | | | |
| Kv 100, cSt | 10.05 | 9.84 | 9.69 | 9.81 | 9.69 | 9.68 | 9.83 | 9.75 | 9.85 |
| Kv 40, cSt | 64.31 | 62.2 | 61.38 | 62 | 60.92 | 60.96 | 62.02 | 61.53 | 62.27 |
| VI | 142 | 142 | 141 | 142 | 142 | 142 | 143 | 142 | 143 |
| Ca,% | .0347 | .0181 | .0009 | .0175 | .0009 | .0006 | .0179 | .0009 | .0165 |
| P,% | .0009 | .0012 | .0009 | .0014 | .0012 | .0008 | .0012 | .0016 | .001 |
| S,% | .0826 | .0641 | .0448 | .064 | .44 | .0429 | .0639 | 448 | .0583 |
| Mo,% | 0 | 0 | 0 | .0092 | .0091 | 0 | 0 | .0091 | .09 |

These data results in Table 1 demonstrate that the addition of molybdenum to the fuel-oil compositions effectively increased detergency in a significant manner without an attendant undesirable increase in the contaminant levels of alkaline earth metal and compounds thereof in the emissions stream. The molybdenum acted as a detergency booster without causing an adverse effect upon emission control systems.

Other embodiments of the present invention will be apparent to those skilled in the art from consideration of the specification and practice of the invention disclosed herein. It is intended that the specification be considered as exemplary only, with a true scope and spirit of the invention being indicated by the following claims.

## Claims

1. Fuel composition for two-stroke engines, comprising:
combustible hydrocarbonaceous liquid fuel;
lubricant comprising an oil of lubricating viscosity;
a detergent comprising an alkaline earth metal-containing compound; and a molybdenum source.

2. The fuel composition of claim 1, wherein the alkaline earth metal-containing compound comprises a salt selected from the group consisting of calcium sulphonate, calcium phenate, magnesium sulphonate, and magnesium phenate, or combinations and mixtures thereof.

3. The fuel composition of claim 1 or claim 2, wherein the detergent comprises a detergent selected from the group consisting of neutral calcium sulphonate detergents and neutral calcium phenate detergents, or combinations and mixtures thereof.

4. The fuel composition of any one of claims 1 to 3, wherein the molybdenum source is selected from the group consisting of molybdenum trioxide, molybdenum sulfonates, molybdenum phenates, molybdenum salicylates, molybdenum carboxylates, mono-nuclear and di-nuclear and tri-nuclear molybdenum dithiocarbamates, neutral and overbased molybdenum salicylates, overbased molybdenum phenates, overbased molybdenum sulfonates, ammonium molybdate, sodium molybdate and potassium molybdate, and molybdenum halides, compounds derived from molybdenum reacted with amines and alcohols, and combinations and mixtures thereof.

5. The fuel composition of any one of claims 1 to 4, wherein the molybdenum source comprises an organomolybdenum complex prepared by reacting fatty oil, diethanolamine, and a molybdenum source.

6. The fuel composition of any one of claims 1 to 5, wherein the liquid fuel is selected from the group consisting of diesel fuel, biodiesel fuel, biodiesel-derived fuel, synthetic diesel, jet fuel, alcohols, ethers, kerosene, Fischer-Tropsch fuels, liquid petroleum gas, fuels derived from coal, genetically engineered biofuels and crops and extracts therefrom, unleaded motor gasolines, reformulated gasolines which contain both hydrocarbons of the gasoline boiling range and fuel-soluble oxygenated blending agents, gasoline, bunker fuel, and mixtures thereof, and emulsions, suspensions, and dispersions thereof in water, alcohol, and other carrier fluids.

7. The fuel composition of any one of claims 1 to 6, comprising about 95 to about 99 wt.% combustible hydrocarbonaceous liquid fuel, about 1 to about 5 wt.% lubricant comprising an oil of lubricating viscosity, about 0.001 to about 0.05 wt.% alkaline earth metal-containing compound, and about 1 ppm to about 10 ppm Mo from the molybdenum source.

8. A method for controlling the deleterious effect on exhaust emissions after-treatment and control devices of at least one metal contaminant and compounds thereof in an exhaust stream from the combustion of a combustible fuel composition in a combustion system of a two-stroke engine, said method comprising the steps of:
(a) intaking a fuel composition into a combustion system of a two-stroke engine, wherein the fuel composition comprises
i) combustible hydrocarbonaceous liquid fuel,
ii) lubricant comprising an oil of lubricating viscosity,
iii) a detergent comprising an alkaline earth metal-containing compound, and
iv) a molybdenum source;
(b) combusting in the combustion system the hydrocarbonaceous fuel to produce combustion products comprising at least one material selected from the group consisting of alkaline earth metal and compounds thereof;
(c) contacting the molybdenum with at least one of the alkaline earth metal, and compounds thereof, in the combustion products,
(d) flowing the combustion products over at least one of a catalyst, a sensor, and an on-board diagnostic device, or a combination of these;
wherein the molybdenum interacts with at least one of the alkaline earth metal or compounds thereof effective to increase detergency, as compared to conducting the same method without including the molybdenum source in the fuel composition, and without blocking the catalyst, sensor and/or on-board diagnostic device.

9. The method of claim 8, wherein the fuel composition is a composition according to any one of claims 2 to 7.

10. The method of claim 8 or claim 9 wherein the alkaline earth metal comprises calcium, and the alkaline earth metal compound in reduced level is calcium sulphate.

11. The method of any one of claims 8 to 10, wherein the alkaline earth metal and compounds thereof in the combustion products originate from the detergent contained in the fuel composition.

12. The method of any one of claims 8 to 11, wherein the combustion system further comprises flowing the combustion products through an after-treatment system.

13. The method of claim 12, wherein the combustion system further comprises flowing the combustion products through an after-treatment system, wherein the after-treatment system is selected from the group consisting of a catalyzed diesel particulate filter and a continuously regenerating technology diesel particulate filter.

14. An apparatus for performing the method of any one of claims 8 to 13, said apparatus comprising:
(a) a two-stroke engine including a combustion chamber adapted to combust a fuel composition;
(b) a means to introduce the fuel composition into the combustion chamber;
(c) means to initiate combustion of the fuel composition in the combustion chamber;
(d) a means to convey combustion products from the combustion chamber;
(e) means to reduce the amount of at least one pollutant from the combustion product.

15. The apparatus of claim 14 comprising storage means containing a fuel composition according to any one of claims 1 to 7.

16. The apparatus of claim 14 or claim 15, wherein the means (e) comprises an after treatment system selected from the group consisting of a diesel oxidation catalyst, a catalyzed diesel particulate matter filter, and a continuously regenerating technology diesel particulate filter.

17. The apparatus of any one of claims 14 to 16, wherein the apparatus is selected from the group consisting of a motorcycle, a moped, a snow mobile, an all terrain vehicle, tractor, mining equipment, construction equipment, a marine outboard motor, a lawn mower, a chain saw, a pump, an electrical generator, a garden tiller, a landscaping hedge trimmer, and a back pack blower.

18. The apparatus of any one of claims 14 to 17, wherein the apparatus is selected from the group consisting of a gasoline engine and a diesel engine.

19. A method for improving the durability of an after-treatment device for a two-stroke engine combustion system, said method comprising contacting a fuel composition containing hydrocarbonaceous fuel, oil of lubricating viscosity, alkaline earth metal-containing detergent compound, and a molybdenum source, and its combustion products a combustion system, with the molybdenum source in an amount sufficient for the molybdenum to interact with one or more contaminants comprising an alkaline earth metal or alkaline earth metal compounds thereof in said fuel composition and combustion products thereof effective to thereby increase detergency without increasing the amount of alkaline earth metal compound contaminants Contacting the after-treatment device.

20. The method according to claim 19 wherein the fuel composition is a composition according to any one of claims 2 to 7.
